# EUROPEAN PATENT SPECIFICATION

(11) **EP 2 891 589 B1**
(45) Date of publication and mention of the grant of the patent: **25.09.2024**
(21) Application number: 14200544.6
(22) Date of filing: 30.12.2014
(51) Int. Cl.: B60W 50/12, B60W 40/08, B60W 50/00, B60W 50/14

(54) **Automatic driver identification**
Automatische Fahreridentifikation
Identification automatique d'un conducteur

(30) Priority: 06.01.2014 US 201461924052 P
(43) Date of publication of application: 08.07.2015
(73) Proprietor: Harman International Industries, Incorporated, Stamford, CT 06901 (US)
(72) Inventor: Roy, Tirtha, Lake Zurich, IL 60047 (US); Taranowski, William, Libertyville, IL 60048 (US); Pautov, Ilya, Wauconda, IL 60084 (US); Speer, Ryan, Libertyville, IL 60048 (US)
(74) Representative: Kraus & Lederer PartGmbB

(56) References cited:
- WO-A1-2013/133791
- US-A1- 2010 087 987
- US-A1- 2013 204 455
- US-B1- 8 527 146

## Description

### TECHNICAL FIELD

The invention relates to identifying a driver using information from vehicle systems for an in-vehicle computing system.

### BACKGROUND

In-vehicle computing systems may perform a variety of functions, including but not limited to controlling vehicle systems, displaying information to a user, and communicating with extra-vehicle devices. Some of the functions of in-vehicle computing systems may be driver-dependent or may have driver-dependent features. For example, some notifications presented via an in-vehicle computing system may be intended for a particular driver, such as a primary driver of the vehicle.

WO 2013/133791 A1 describes a system and a method for identifying an occupant of a vehicle as an authorized user of said vehicle.

US 2010/087987 A1 describes an apparatus and a method for vehicle driver recognition and customization using onboard vehicle system settings.

US 8 527 146 B1 describes a system and a method for controlling one or more settings of a vehicle using a device comprising an electronic circuit.

US 2013/204455 A1 describes a method, system or computer usable program product for porting driver preferences between vehicles.

### SUMMARY

The invention according to claim 1 provides a method for an in-vehicle computing system includes detecting a request to perform a driver-dependent function, where performing the driver-dependent function includes presenting an incoming notification that is received from an external device located outside of the vehicle, and inferring an identity of the driver based on current driving behavior relative to one or more driver profiles, each of the one or more driver profiles generated using driver-specific past driving behavior, and selectively enabling performance of the driver-dependent function of the in-vehicle computing system based on the inferred driver identity.

The driver-dependent function may include a notification of one or more of available software updates for the in-vehicle computing system, vehicle recall data, and environmental information, and wherein detecting the request to perform the driver-dependent function includes receiving data associated with the notification. Said receiving data may include receiving the data over the air from a network or a cloud computing system communicatively coupled to the in-vehicle computing system.

The selectively enabling performance of the driver-dependent function may further include displaying one or more deferral options to a primary driver, the one or more deferral options based on a driver profile associated with the primary driver. The one or more deferral options may be based on a current status of the vehicle and/or the primary driver.

Inferring an identity of the driver based on current driving behavior relative to one or more driver profiles may include comparing a weighted combination of the current driving behavior to the one or more driver profiles.

Inferring an identity of the driver based on current driving behavior relative to one or more driver profiles may include determining a confidence score based on the comparison of the weighted combination of the current driving behavior to the one or more driver profiles.

The invention according to claim 10 provides an in-vehicle computing system comprising a processor, a communication interface communicatively coupling the in-vehicle computing system to a cloud-based network, one or more vehicle sensors, a display device, and a storage device storing instructions executable by the processor to receive a current driving behavior, weight the received driving behavior based on relevance to an identity of a current driver of a vehicle, determine a confidence score based on a comparison of the weighted driving behavior to a driver profile, and identify the current driver as a driver identified by the driver profile responsive to determining that the confidence score is above a threshold, selectively present an incoming notification that is received from an external device outside the vehicle based on the identified driver.

The instructions may be further executable to perform a driver-dependent function responsive to determining that the current driver is the driver identified by the driver profile.

The driver-dependent function may include adjusting settings and/or preferences of the in-vehicle computing system and/or the vehicle.

The driver-dependent function may include unlocking a secure feature of the in-vehicle computing system.

### BRIEF DESCRIPTION OF THE DRAWINGS

The invention may be better understood from reading the following description of non-limiting embodiments, with reference to the attached drawings, wherein below:
FIG. 1 shows an example partial view of an interior of a cabin of a vehicle in accordance with one or more embodiments of the present invention;
FIG. 2 shows example architecture for a driver identification system in accordance with one or more embodiments of the present invention;
FIG. 3 is a block diagram of an in-vehicle computing system in accordance with one or more embodiments of the present invention;
FIG. 4 is a flow chart of a method for controlling performance of a driver-dependent function based on an identification of the driver as a primary driver in accordance with one or more embodiments of the present invention;
FIG. 5 is a flow chart of a method for determining an identity of a driver based on weighted information from one or more data sources in accordance with one or more embodiments of the present invention;
FIG. 6 is a flow chart of a method of generating a driver profile in accordance with one or more embodiments of the present invention; and
FIG. 7 is a flow chart of a method of presenting notifications for an in-vehicle computing system based on an identification of a driver of a vehicle in accordance with one or more embodiments of the present invention.

### DETAILED DESCRIPTION

As described above, some functions of an in-vehicle computing system may be driver-dependent and/or have features that are driver-dependent. By adjusting operation of the in-vehicle computing system based on the current driver and one or more functions being performed by the in-vehicle computing system, the operation of the system may be targeted to a particular driver. For example, notifications that are presented by the in-vehicle computing system may provide information that is targeted to a primary driver of the vehicle. If the current driver may be identified as the primary driver, an informed determination may be made regarding presentation of the notification that may increase the likelihood that a successful response to the notification will be received.

While some information, such as data received from a key fob, BLUETOOTH device, or other mobile devices may appear to identify a primary driver, these devices may be transferred to other drivers and result in a misidentified driver. The present invention describes methods and systems for identifying a driver of a vehicle based on aggregated information from multiple sources, such as vehicle sensors, devices external to an in-vehicle computing system, time/date-keeping systems, etc. By aggregating such data, a profile of a primary driver and one or more secondary/tertiary/etc. drivers may be generated. Comparing driving habits of a current driver to such profiles may enable the system to determine the identity of the current driver.

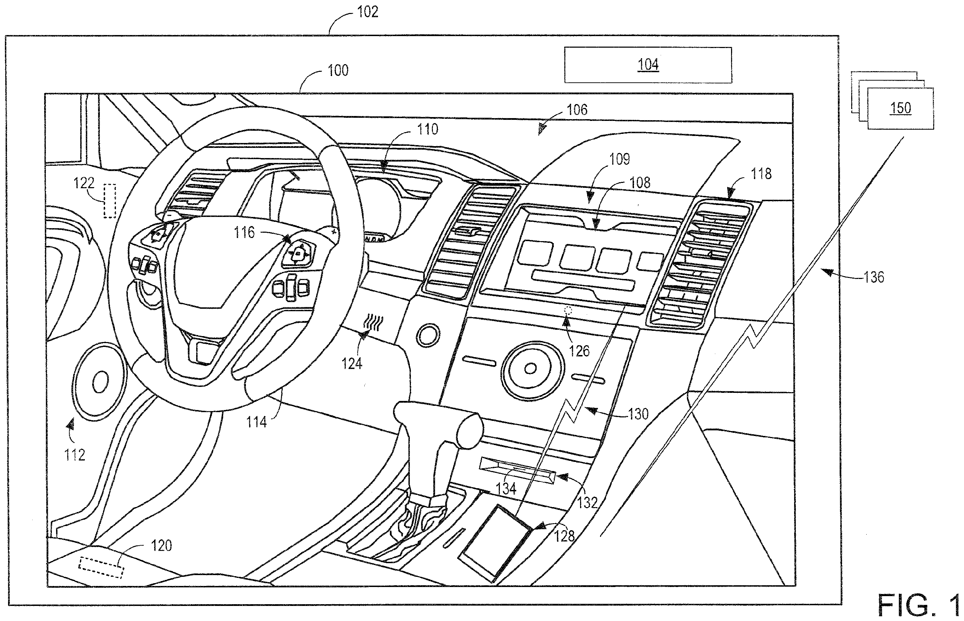

FIG. 1 shows an example partial view of an interior of a cabin 100 of a vehicle 102, in which a driver and/or one or more passengers may be seated. Vehicle 102 of FIG. 1 may be a motor vehicle including drive wheels (not shown) and an internal combustion engine 104. Internal combustion engine 104 may include one or more combustion chambers which may receive intake air via an intake passage and exhaust combustion gases via an exhaust passage. Vehicle 102 may be a road automobile, among other types of vehicles. In some examples, vehicle 102 may include a hybrid propulsion system including an energy conversion device operable to absorb energy from vehicle motion and/or the engine and convert the absorbed energy to an energy form suitable for storage by an energy storage device. Vehicle 102 may include a fully electric vehicle, incorporating fuel cells, solar energy capturing elements, and/or other energy storage systems for powering the vehicle.

As shown, an instrument panel 106 may include various displays and controls accessible to a driver (also referred to as the user) of vehicle 102. For example, instrument panel 106 may include a touch screen 108 of an in-vehicle computing system 109 (e.g., an infotainment system), an audio system control panel, and an instrument cluster 110. While the example system shown in FIG. 1 includes audio system controls that may be performed via a user interface of in-vehicle computing system 109, such as touch screen 108 without a separate audio system control panel, in other embodiments, the vehicle may include an audio system control panel, which may include controls for a conventional vehicle audio system such as a radio, compact disc player, MP3 player, etc. The audio system controls may include features for controlling one or more aspects of audio output via speakers 112 of a vehicle speaker system. For example, the in-vehicle computing system or the audio system controls may control a volume of audio output, a distribution of sound among the individual speakers of the vehicle speaker system, an equalization of audio signals, and/or any other aspect of the audio output. In further examples, in-vehicle computing system 109 may adjust a radio station selection, a playlist selection, a source of audio input (e.g., from radio or CD or MP3), etc., based on user input received directly via touch screen 108, or based on data regarding the user (such as a physical state and/or environment of the user) received via external devices 150 and/or mobile device 128.

In some embodiments, one or more hardware elements of in-vehicle computing system 109, such as touch screen 108, a display screen, various control dials, knobs and buttons, memory, processor(s), and any interface elements (e.g., connectors or ports) may form an integrated head unit that is installed in instrument panel 106 of the vehicle. The head unit may be fixedly or removably attached in instrument panel 106. In additional or alternative embodiments, one or more hardware elements of the in-vehicle computing system may be modular and may be installed in multiple locations of the vehicle. Instrument cluster 110 may include various gauges such as a fuel gauge, tachometer, speedometer, and odometer, as well as indicators and warning lights. A steering wheel 114 may project from the instrument panel below instrument cluster 110. Optionally, steering wheel 114 may include controls 116 which may be used in conjunction with touch screen 108 to navigate features of an in-vehicle computing system and to control the in-vehicle computing system. In addition to the components depicted in FIG. 1, it will be appreciated that instrument panel 106 may include additional components such as door and window controls, a cigarette lighter which may also be used as a low-voltage power outlet, a glove compartment, and/or any other suitable elements. In one or more embodiments, control of in-vehicle climate (such as cabin temperature) via climate control system vents 118 may be performed using touch screen 108 and thus no separate climate control interface may be included in instrument panel 106. In alternative embodiments, however, a separate climate control interface may be provided.

The cabin 100 may include one or more sensors for monitoring the vehicle, the user, and/or the environment. For example, the cabin 100 may include one or more seat-mounted pressure sensors 120 configured to measure the pressure applied to the seat to determine the presence of a user. The cabin 100 may include one or more door sensors 122 configured to monitor door activity, such as the opening and/or closing of the door, the locking of the door, the operation of a window of the door, and/or any other suitable door activity event. A humidity sensor 124 may be included to measure the humidity content of the cabin. A microphone 126 may be included to receive user input in the form of voice commands, to enable a user to conduct telephone calls, and/or to measure ambient noise in the cabin 100. It is to be understood that the placement of the sensors illustrated in FIG. 1 is exemplary, and one or more additional or alternative sensors may be positioned in any suitable location of the vehicle. For example, additional sensors may be positioned in an engine compartment, on an external surface of the vehicle, and/or in other suitable locations for providing information regarding the operation of the vehicle, ambient conditions of the vehicle, a user of the vehicle, etc. Information regarding ambient conditions of the vehicle, vehicle status, or vehicle driver may also be received from sensors external to/separate from the vehicle (that is, not part of the vehicle system), such as from sensors coupled to external devices 150 and/or mobile device 128.

Cabin 100 may also include one or more user objects, such as mobile device 128, that are stored in the vehicle before, during, and/or after travelling. The mobile device may include a smart phone, a tablet, a laptop computer, a portable media player, and/or any suitable mobile computing device. The mobile device 128 may be connected to the in-vehicle computing system via communication link 130. The communication link 130 may be wired (e.g., via Universal Serial Bus [USB], Mobile High-Definition Link [MHL], High-Definition Multimedia Interface [HDMI], etc.) or wireless (e.g., via BLUETOOTH, WI-FI, Near-Field Communication [NFC], cellular connectivity, etc.) and configured to provide two-way communication between the mobile device and the in-vehicle computing system. For example, the communication link 130 may provide sensor and/or control signals from various vehicle systems (such as vehicle audio system, climate control system, etc.) and the touch screen 108 to the mobile device 128 and may provide control and/or display signals from the mobile device 128 to the in-vehicle systems and the touch screen 108. The communication link 130 may also provide power to the mobile device 128 from an in-vehicle power source in order to charge an internal battery of the mobile device.

While the mobile device 128 is illustrated as being spatially separated from the in-vehicle computing system and connected via a substantially external communication link (e.g., a cable or radiofrequency signal), it is to be understood that a slot 132 or other storage structure may be formed in the instrument panel 106 or other location in the vehicle to hold the mobile device in a particular location. The storage structure may include an integrated connector 134 to which the mobile device 128 may be attached or "docked" for providing a substantially internal communication link between the mobile device and the computing system.

In-vehicle computing system 109 may also be communicatively coupled to additional devices operated by the user but located external to vehicle 102, such as one or more external devices 150. In the depicted embodiment, external devices 150 are located outside of vehicle 102 though it will be appreciated that in alternate embodiments, external devices may be located inside cabin 100. The external devices may include a server computing system, personal computing system, portable electronic device, electronic wrist band, electronic head band, portable music player, electronic activity tracking device, pedometer, smart-watch, key fob, GPS system, etc. External devices 150 may be connected to the in-vehicle computing system via communication link 136 which may be wired or wireless, as discussed with reference to communication link 130, and configured to provide two-way communication between the external devices and the in-vehicle computing system. For example, external devices 150 may include one or more sensors and communication link 136 may transmit sensor output from external devices 150 to in-vehicle computing system 109 and touch screen 108. External devices 150 may also store and/or receive information regarding contextual data, user behavior/preferences (e.g., as observed during one or more prior vehicle trips), operating rules, etc. and may transmit such information from the external devices 150 to in-vehicle computing system 109 and touch screen 108.

In-vehicle computing system 109 may analyze the input received from external devices 150, mobile device 128, and/or other input sources and select settings for various in-vehicle systems (such as climate control system or audio system), provide output via touch screen 108 and/or speakers 112, communicate with mobile device 128 and/or external devices 150, and/or perform other actions based on the assessment. In some embodiments, all or a portion of the assessment may be performed by the mobile device 128 and/or the external devices 150.

In some embodiments, one or more of the external devices 150 may be communicatively coupled to in-vehicle computing system 109 indirectly, via mobile device 128 and/or another of the external devices 150. For example, communication link 136 may communicatively couple external devices 150 to mobile device 128 such that output from external devices 150 is relayed to mobile device 128. Data received from external devices 150 may then be aggregated at mobile device 128 with data collected by mobile device 128, the aggregated data then transmitted to in-vehicle computing system 109 and touch screen 108 via communication link 130. Similar data aggregation may occur at a server system and then transmitted to in-vehicle computing system 109 and touch screen 108 via communication link 136/130.

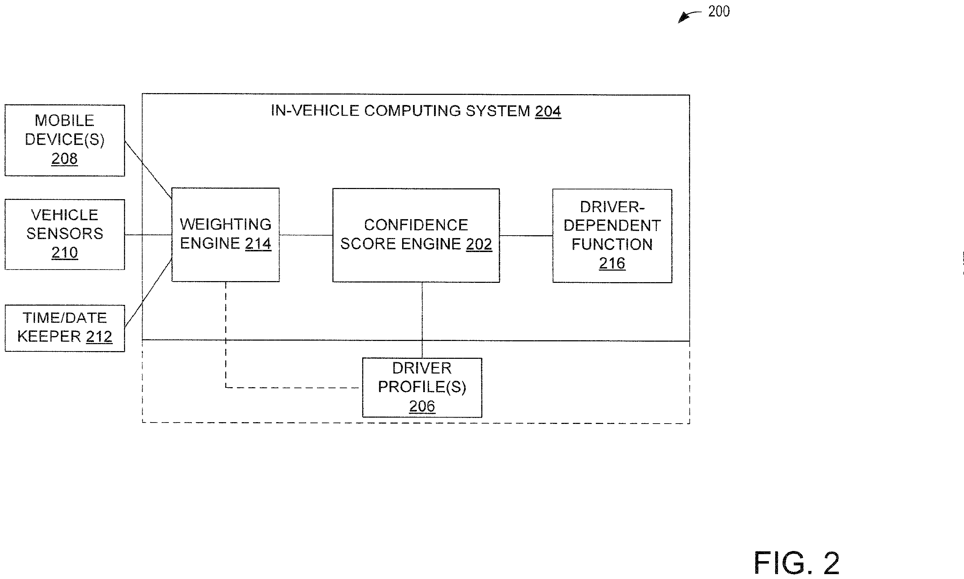

FIG. 2 shows example architecture for a driver identification system 200 including a confidence score engine 202 of an in-vehicle computing system 204 for comparing received information to one or more driver profiles 206 in order to determine whether a current driver of a vehicle is a primary driver of that vehicle. Information from one or more mobile devices 208, vehicle sensors 210, a time/date keeper 212, and/or any other suitable source of vehicle and/or driver status information may provide data to a weighting engine 214. For example, the data sources may provide information related to a seat position, seat pressure, radio settings, user interaction with a user interface of the in-vehicle computing system, routes travelled during a current trip, driving styles, such as acceleration, braking, steering, and speed (e.g., average speed and/or relative speed to a speed limit) profiles, time of day, calendar day, information from connected devices, and/or any other suitable information for identifying the driver.

The weighting engine 214 may aggregate and apply a weight to information received from each type of data source. While information from some data sources may be weighted similarly or the same, the weighting may be specific to each data source and selected for that data source. The weighting for information from one or more data sources may be adjusted based on information received from that data source and/or other data sources (e.g., the content of the information and/or the availability/presence of the information). For example, information from a navigational system of the vehicle may be weighted more heavily at certain times of the day than at others. Accordingly, the information from the navigational system may be assigned a first weight during a first range of times and a second weight during a second range of times.

In some embodiments, the weighting engine 214 may receive information from the one or more driver profiles 206 in order to determine and/or identify a weight to apply to the information from the different data sources. For example, the weighting may be applied responsive to and/or based on the types and/or amounts of information present in one or more of the driver profiles 206. The weighting engine 214 may provide the weighted information and/or an indication of the weighted information from available data sources (e.g., data sources 208, 210, and 212) to the confidence score engine 202 for processing. The confidence score engine 202 may receive and/or access driver profiles 206 and compare the weighted information to the characteristics of the driver profiles 206. The confidence score engine 202 may calculate a confidence score based on, for example, how closely the information from the weighting engine 214 and/or the data sources 208, 210, and 212 matches the characteristics of a primary driver profile of the driver profiles 206 and the weight of each type of information. In some embodiments, the confidence score engine 202 may determine confidence scores for each driver profile of the driver profiles 206 in order to identify the level of confidence (e.g., the likelihood) that the current driver is the driver associated with that driver profile.

The confidence score determined by the confidence score engine 202 may be provided to a driver-dependent function 216 of the in-vehicle computing system 204 and/or a controller of the driver-dependent function 216. For example, the performance of the driver-dependent function 216 may be controlled on the basis of the value of the confidence score, such that the function 216 is not performed and/or is performed differently for a confidence score that is below a threshold. As illustrated in FIG. 2, the weighting engine 214, confidence score engine 202, and driver-dependent function 216 may be located and/or integrated within the in-vehicle computing system 204 and the driver profiles 206 may be located outside of the in-vehicle computing system 204 and/or stored on a storage device (e.g., of an extra-vehicle and/or cloud-based server) remote from and communicatively connected to the in-vehicle computing system 204. However, it is to be understood that one or more of the components of the in-vehicle computing system 204 may be integrated in a computing system external to and/or remote from the in-vehicle computing system 204 and/or the driver profiles 206 may be stored locally to the in-vehicle computing system 204.

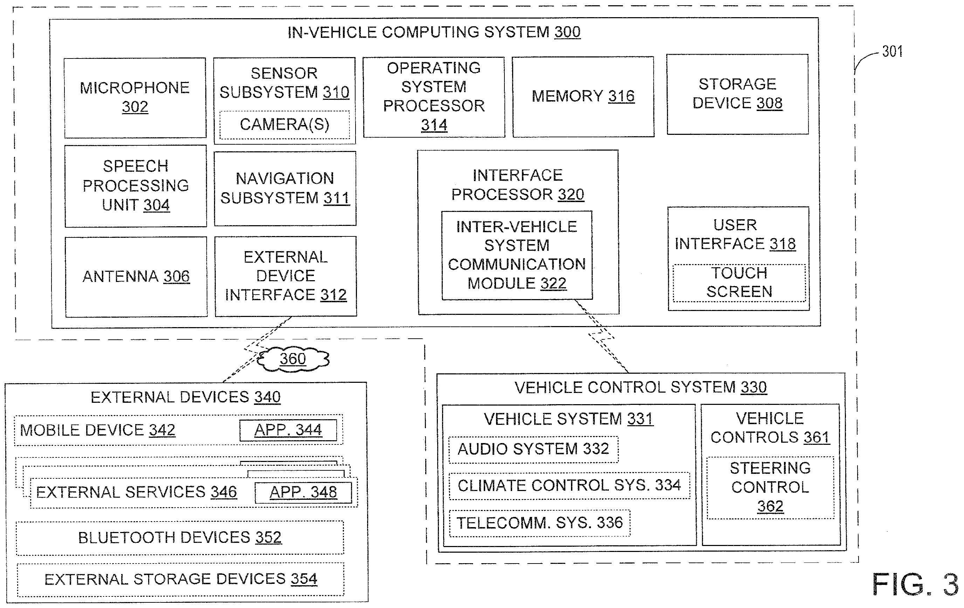

FIG. 3 shows a block diagram of an in-vehicle computing system 300 configured and/or integrated inside vehicle 301. In-vehicle computing system 300 may be an example of in-vehicle computing system 109 of FIG. 1 in some embodiments. In some examples, the in-vehicle computing system may be a vehicle infotainment system configured to provide information-based media content (audio and/or visual media content, including entertainment content, navigational services, etc.) to a vehicle user to enhance the operator's in-vehicle experience. The vehicle infotainment system may include, or be coupled to, various vehicle systems, sub-systems, hardware components, as well as software applications and systems that are integrated in, or integratable into, vehicle 301 in order to enhance an in-vehicle experience for a driver and/or a passenger.

In-vehicle computing system 300 may include one or more processors including an operating system processor 314 and an interface processor 320. Operating system processor 314 may execute an operating system on the in-vehicle computing system, and control input/output, display, playback, and other operations of the in-vehicle computing system. Interface processor 320 may interface with a vehicle control system 330 via an inter-vehicle system communication module 322.

Inter-vehicle system communication module 322 may output data to other vehicle systems 331 and vehicle control elements 361, while also receiving data input from other vehicle components and systems 331, 361, e.g. by way of vehicle control system 330. When outputting data, inter-vehicle system communication module 322 may provide a signal via a bus corresponding to any status of the vehicle, the vehicle surroundings, or the output of any other information source connected to the vehicle. Vehicle data outputs may include, for example, analog signals (such as current velocity), digital signals provided by individual information sources (such as clocks, thermometers, location sensors such as Global Positioning System [GPS] sensors, etc.), digital signals propagated through vehicle data networks (such as an engine controller area network [CAN] bus through which engine related information may be communicated, a climate control CAN bus through which climate control related information may be communicated, and a multimedia data network through which multimedia data is communicated between multimedia components in the vehicle). For example, the in-vehicle computing system may retrieve from the engine CAN bus the current speed of the vehicle estimated by the wheel sensors, a power state of the vehicle via a battery and/or power distribution system of the vehicle, an ignition state of the vehicle, etc. In addition, other interfacing means such as Ethernet may be used as well.

A non-volatile storage device 308 may be included in in-vehicle computing system 300 to store data such as instructions executable by processors 314 and 320 in non-volatile form. The storage device 308 may store application data to enable the in-vehicle computing system 300 to run an application for connecting to and/or pairing with a mobile device and/or a wearable device. The storage device 308 may additionally or alternatively store application data to enable the in-vehicle computing system 300 to identify a driver of a vehicle using a confidence score engine, such as confidence score engine 202 of FIG. 2. In-vehicle computing system 300 may further include a volatile memory 316. Volatile memory 316 may be random access memory (RAM). Non-transitory storage devices, such as non-volatile storage device 308 and/or volatile memory 316, may store instructions and/or code that, when executed by a processor (e.g., operating system processor 314 and/or interface processor 320), controls the in-vehicle computing system 300 to perform one or more of the actions described in the invention.

A microphone 302 may be included in the in-vehicle computing system 300 to receive voice commands and/or voice queries from a user and/or to measure ambient noise in the vehicle. A speech processing unit 304 may process the received voice data and/or the received voice data may be transmitted to an external voice recognition server located remotely to the vehicle and/or in-vehicle computing system 300. In some embodiments, in-vehicle computing system 300 may also be able to receive voice commands/queries and sample ambient vehicle noise using a microphone included in an audio system 332 of the vehicle.

One or more additional sensors may be included in a sensor subsystem 310 of the in-vehicle computing system 300. For example, the sensor subsystem 310 may include a camera, such as a rear view camera for assisting a user in parking the vehicle. Sensor subsystem 310 of in-vehicle computing system 300 may communicate with and receive inputs from various vehicle sensors and may further receive user inputs. For example, the inputs received by sensor subsystem 310 may include transmission gear position, transmission clutch position, gas pedal input, brake input, transmission selector position, vehicle speed, engine speed, mass airflow through the engine, ambient temperature, intake air temperature, etc., as well as inputs from climate control system sensors (such as heat transfer fluid temperature, antifreeze temperature, fan speed, passenger compartment temperature, desired passenger compartment temperature, ambient humidity, etc.), an audio sensor detecting voice commands issued by a user, a fob sensor receiving commands from and optionally tracking the geographic location/proximity of a fob of the vehicle, etc. While certain vehicle system sensors may communicate with sensor subsystem 310 alone, other sensors may communicate with both sensor subsystem 310 and vehicle control system 330, or may communicate with sensor subsystem 310 indirectly via vehicle control system 330. A navigation subsystem 311 of in-vehicle computing system 300 may generate and/or receive navigation information such as location information (e.g., via a GPS sensor and/or other sensors from sensor subsystem 310), route guidance, traffic information, point-of-interest (POI) identification, and/or provide other navigational services for the driver.

External device interface 312 of in-vehicle computing system 300 may be couplable to and/or communicate with one or more external devices 340 located external to vehicle 301. While the external devices are illustrated as being located external to vehicle 301, it is to be understood that they may be temporarily housed in vehicle 301, such as when the user is operating the external devices while operating vehicle 301. For example, the external devices 340 are not integral to vehicle 301. The external devices 340 may include a mobile device 342 (e.g., connected via a Bluetooth connection) or an alternate Bluetooth-enabled device 352. Mobile device 342 may be a mobile phone, smart phone, wearable devices/sensors that may communicate with the in-vehicle computing system via wired and/or wireless communication, or other portable electronic device(s). Other external devices include external services 346. For example, the external devices may include extra-vehicular devices that are separate from and located externally to the vehicle. Still other external devices include external storage devices 354, such as solid-state drives, pen drives, USB drives, etc. External devices 340 may communicate with in-vehicle computing system 300 either wirelessly or via connectors.

For example, external devices 340 may communicate with in-vehicle computing system 300 through the external device interface 312 over network 360, a universal serial bus (USB) connection, a direct wired connection, a direct wireless connection, and/or other communication link. The external device interface 312 may provide a communication interface to enable the in-vehicle computing system to communicate with mobile devices associated with contacts of the driver. For example, the external device interface 312 may enable phone calls to be established and/or text messages (e.g., SMS, MMS, etc.) to be sent (e.g., via a cellular communications network) to a mobile device associated with a contact of the driver.

One or more applications 344 may be operable on mobile device 342. As an example, mobile device application 344 may be operated to aggregate user data regarding interactions of the user with the mobile device. For example, mobile device application 344 may aggregate data regarding music playlists listened to by the user on the mobile device, telephone call logs (including a frequency and duration of telephone calls accepted by the user), positional information including locations frequented by the user and an amount of time spent at each location, etc. The collected data may be transferred by application 344 to external device interface 312 over network 360. In addition, specific user data requests may be received at mobile device 342 from in-vehicle computing system 300 via the external device interface 312. The specific data requests may include requests for determining where the user is geographically located, an ambient noise level and/or music genre at the user's location, an ambient weather condition (temperature, humidity, etc.) at the user's location, etc. Mobile device application 344 may send control instructions to components (e.g., microphone, etc.) or other applications (e.g., navigational applications) of mobile device 342 to enable the requested data to be collected on the mobile device. Mobile device application 344 may then relay the collected information back to in-vehicle computing system 300.

Likewise, one or more applications 348 may be operable on external services 346. As an example, external services applications 348 may be operated to aggregate and/or analyze data from multiple data sources. For example, external services applications 348 may aggregate data from one or more social media accounts of the user, data from the in-vehicle computing system (e.g., sensor data, log files, user input, etc.), data from an internet query (e.g., weather data, POI data), etc. The collected data may be transmitted to another device, such as a weighting engine and/or confidence score engine, and/or analyzed by the application to determine a context of the driver, vehicle, and environment.

Vehicle control system 330 may include controls for controlling aspects of various vehicle systems 331 involved in different in-vehicle functions. These may include, for example, controlling aspects of vehicle audio system 332 for providing audio entertainment to the vehicle occupants, aspects of climate control system 334 for meeting the cabin cooling or heating needs of the vehicle occupants, as well as aspects of telecommunication system 336 for enabling vehicle occupants to establish telecommunication linkage with others.

Audio system 332 may include one or more acoustic reproduction devices including electromagnetic transducers such as speakers for providing audio output to a driver and/or passengers of the vehicle. For example, the audio output may correspond to text-to-speech output presenting an audible notification to a driver of the vehicle. Vehicle audio system 332 may be passive or active such as by including a power amplifier. In some examples, in-vehicle computing system 300 may be the only audio source for the acoustic reproduction device or there may be other audio sources that are connected to the audio reproduction system (e.g., external devices such as a mobile phone). The connection of any such external devices to the audio reproduction device may be analog, digital, or any combination of analog and digital technologies.

Climate control system 334 may be configured to provide a comfortable environment within the cabin or passenger compartment of vehicle 301. Climate control system 334 includes components enabling controlled ventilation such as air vents, a heater, an air conditioner, an integrated heater and air-conditioner system, etc. Other components linked to the heating and air-conditioning setup may include a windshield defrosting and defogging system capable of clearing the windshield and a ventilation-air filter for cleaning outside air that enters the passenger compartment through a fresh-air inlet.

Vehicle control system 330 may also include controls for adjusting the settings of various vehicle controls 361 (or vehicle system control elements) related to the engine and/or auxiliary elements within a cabin of the vehicle, such as steering wheel controls 362 (e.g., steering wheel-mounted audio system controls, cruise controls, windshield wiper controls, headlight controls, turn signal controls, etc.), instrument panel controls, microphone(s), accelerator/brake/clutch pedals, a gear shift, door/window controls positioned in a driver or passenger door, seat controls, cabin light controls, audio system controls, cabin temperature controls, etc. The control signals may also control audio output at one or more speakers of the vehicle's audio system 332. For example, the control signals may adjust audio output characteristics such as volume, equalization, audio image (e.g., the configuration of the audio signals to produce audio output that appears to a user to originate from one or more defined locations), audio distribution among a plurality of speakers, etc. Likewise, the control signals may control vents, air conditioner, and/or heater of climate control system 334. For example, the control signals may increase delivery of cooled air to a specific section of the cabin.

Control elements positioned on an outside of a vehicle (e.g., controls for a security system) may also be connected to computing system 300, such as via communication module 322. The control elements of the vehicle control system may be physically and permanently positioned on and/or in the vehicle for receiving user input. In addition to receiving control instructions from in-vehicle computing system 300, vehicle control system 330 may also receive input from one or more external devices 340 operated by the user, such as from mobile device 342. This allows aspects of vehicle systems 331 and vehicle controls 361 to be controlled based on user input received from the external devices 340.

In-vehicle computing system 300 may further include an antenna 306. Antenna 306 is shown as a single antenna, but may comprise one or more antennas in some embodiments. The in-vehicle computing system may obtain broadband wireless internet access via antenna 306, and may further receive broadcast signals such as radio, television, weather, traffic, and the like. The in-vehicle computing system may receive positioning signals such as GPS signals via one or more antennas 306. The in-vehicle computing system may also receive wireless commands via RF such as via antenna(s) 306 or via infrared or other means through appropriate receiving devices. In some embodiments, antenna 306 may be included as part of audio system 332 or telecommunication system 336. Additionally, antenna 306 may provide AM/FM radio signals to external devices 340 (such as to mobile device 342) via external device interface 312.

One or more elements of the in-vehicle computing system 300 may be controlled by a user via user interface 318. User interface 318 may include a graphical user interface presented on a touch screen, such as touch screen 108 of FIG. 1, and/or user-actuated buttons, switches, knobs, dials, sliders, etc. For example, user-actuated elements may include steering wheel controls, door and/or window controls, instrument panel controls, audio system settings, climate control system settings, and the like. A user may also interact with one or more applications of the in-vehicle computing system 300 and mobile device 342 via user interface 318. In addition to receiving a user's vehicle setting preferences on user interface 318, vehicle settings selected by in-vehicle control system may be displayed to a user on user interface 318. Notifications and other messages, as well as navigational assistance, may be displayed to the user on a display of the user interface. The user interface 318 may also include information to enable a user to respond to a driver-dependent function that is being executed by the in-vehicle computing system 300.

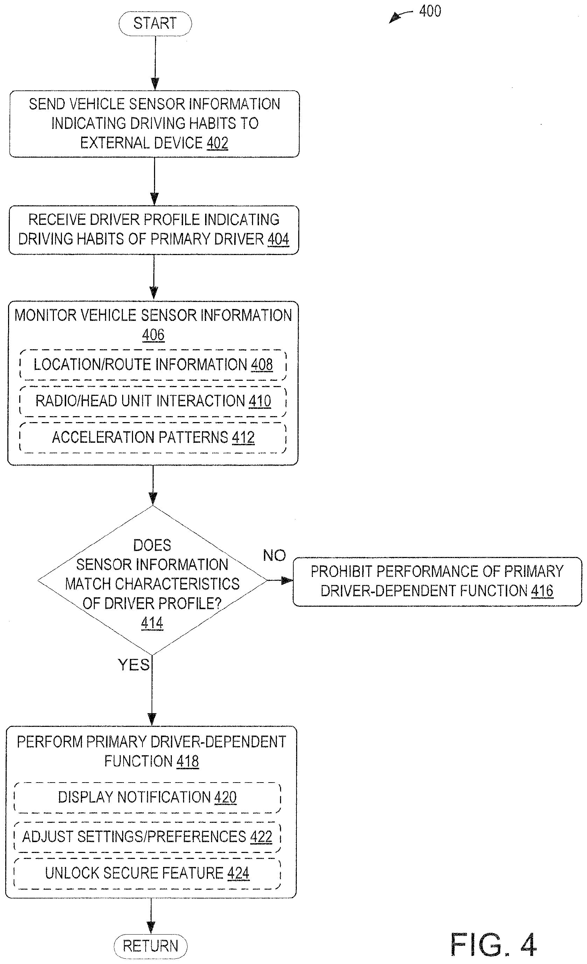

FIG. 4 is a flow chart of a method 400 for controlling performance of a driver-dependent function based on an identification of the driver as a primary driver. The method 400 may be performed by an in-vehicle computing system, such as in-vehicle computing system 109 of FIG. 1. At 402, the method 400 includes sending vehicle sensor information indicating driving habits of a driver to an external device, such as an extra-vehicle server. The sensor information may be collected and/or transmitted over time (e.g., during a learning period) in order to enable a driver profile to be generated based on the sensor information and/or any other suitable information. For example, the sensor information may indicate typical driving behaviors of the driver (e.g., accelerator pedal usage profiles, brake pedal usage profiles, vehicle turning hardness, etc.) observed by the in-vehicle computing system. For example, average turning hardness may be based on average centripetal acceleration during a turning maneuver. Additionally, rate of change of steering wheel angle during a turning operation may be utilized to categorize the hardness of a turn. After sending the vehicle sensor information, the method 400 proceeds to 404 to receive a driver profile (e.g., from the extra-vehicle server) indicating the driving habits associated with a primary driver of the vehicle.

At 406, the method 400 includes monitoring vehicle sensor information to determine driving habits of a current driver of the vehicle. For example, monitoring the vehicle sensor information may occur after a learning period and/or during a different trip (e.g., after a vehicle shut down, sensed door opening, etc.) than the trip during which the driver profile-building sensor information was transmitted to the external device. Examples of monitored sensor information include but are not limited to location and/or route information, as indicated at 408, radio and/or head unit interaction, as indicated at 410, acceleration patterns, as indicated at 412, and/or any other suitable sensor information indicating driver patterns and/or a driver identity.

At 414, the method 400 includes determining (e.g., inferring) if the monitored sensor information matches the characteristics of a primary driver profile. If the sensor information does not match the characteristics of the primary driver profile (e.g., if a threshold difference exists between the sensor information and the primary driver profile, "NO" at 414), the method proceeds to 416 to prohibit the performance of the primary driver-dependent function. Conversely, if the sensor information matches the characteristics of the primary driver profile (e.g., "YES" at 414), the method proceeds to 418 to perform the primary driver-dependent function. Performing the primary driver-dependent function may include displaying a notification to the primary driver, as indicated at 420, adjusting settings and/or preferences to those associated with a primary driver, as indicated at 422, unlocking a secured feature, as indicated at 424, and/or performing any other action that targets and/or requires the presence of the primary driver.

For example, the method 400 may be performed in order to differentiate between two drivers of a vehicle, a primary driver and an alternate driver. The primary driver may be the owner of the vehicle and/or the most frequent driver of the vehicle (e.g., based on time and/or mileage), such as another member of the primary driver's household. The alternate driver may be a regular driver of the vehicle who drives the vehicle less frequently (e.g., based on time and/or mileage) than the primary driver, or a one-time/irregular driver, such as a guest of the primary driver's household or friend of the primary driver.

At least the primary driver may be monitored during one or more driving excursions (e.g., during a learning period) in order to build a primary driver profile. Parameters such as seat position, radio channel/volume settings, turning hardness (e.g., acceleration and/or force of turning the steering wheel), temperature settings (e.g., defined during different climates/ambient conditions), and/or other static or dynamic operating parameters describing driving behaviors of the primary driver may be monitored and transmitted to an extra-vehicle server in order to build the primary driver profile. The extra-vehicle server may receive the monitored parameters (e.g., in the form of continuous updates with current or recently-acquired data) and determine a running average of observed values associated with each parameter. As a non-limiting example, the extra-vehicle server may determine a learned average seating position of 3, a most frequently-selected radio channel of 88.7 FM, a turning hardness rating of 85, an internal temperature setting of 20 degrees Celsius (equivalent to 68 degrees Fahrenheit) in cold ambient temperatures (e.g., during winter) and 22 degrees Celsius (equivalent to 72 degrees Fahrenheit) during warm ambient temperatures (e.g., during summer), etc. Learned averages may be further determined and/or different averages may be organized based on relationships between multiple parameters, such as the example average temperature settings described above.

The learned average parameter values may be determined based upon an aggregation of the parameter values received from multiple different in-vehicle computing systems that make up different driver profiles in a driver identification system (e.g., including one or more extra-vehicle servers receiving parameters from multiple vehicles/drivers). The aggregation may be performed for all data received (e.g., regardless of vehicle/driver information) and/or per vehicle make/model/year, per geographic region, etc. In this way, the observed parameters for the driver may be compared to previously-observed parameters for all other drivers/driver profiles in the system, all drivers/driver profiles associated with the same make, model, and/or year of vehicle as that of the driver, all other drivers/driver profiles associated with the same geographic region as the driver, etc. The value of the parameter may be determined based on such a comparison in some embodiments. For example, the seat position may be determined to be a 3 based on the comparison of the position of the seat relative to positions of seats of other drivers (e.g., the driver may be in the third most common seat position) in some embodiments. The seat position may be determined to be a 3 based on the position of the seat relative to the possible positions for that vehicle in other embodiments (e.g., the seat may be in a position that is three positions from the front-most possible position of the seat).

After the primary driver profile is generated, an in-vehicle computing system may monitor the above-described parameters during a current vehicle trip in which a current driver is driving the vehicle. During the current vehicle trip, a current average (e.g., average observed on the current vehicle trip) or instantaneous/current value for a given parameter may be compared to the learned average of that parameter in the primary driver profile. For example, a current seat position may be 3, a current radio channel may be 100.7, a current average turning hardness may be 82, and a current temperature setting may be 21 degrees Celsius (equivalent to 70 degrees Fahrenheit). In determining whether the current driver is the primary driver, the observed current average and/or instantaneous/current values for parameters for the current trip may be compared to the associated learned averages in the primary driver profile. Although the observed parameters may not match those of the primary driver profile exactly, the observed parameters may be weighted and/or compared to a threshold for that parameter. For example, parameters may be weighted based on a likelihood that that parameter is indicative of the driver, which may in turn be based on the number of possible values for the parameter, the range of observed values during the primary driver learning period for that parameter, historical data indicating correlations between successful driver-to-driver profile matching in other vehicles/from other in-vehicle computing systems, etc. The weights may be determined based on the number of monitored/compared parameters (e.g., such that the sum of the weights equals the number of monitored/compared parameters). In some embodiments, the weights may be determined based on aggregated information from multiple in-vehicle computing systems/vehicles/drivers, as described above with respect to the determination of the parameter values.

In a non-limiting example, the current seat position may be weighted at 1.25, the turning hardness and temperature setting may be weighted at 1, and the radio station may be rated at 0.75. Parameters having incremental values, such as the current seat position, turning hardness rating, and temperature setting, may be compared to a threshold range of values based on/around the learned average for that parameter and assigned a binary value based on whether the observed current value falls within the threshold range of values. Parameters that already exhibit binary features, such as the radio station setting (e.g., the radio station either is or is not the same as the most frequently-selected radio station), may be assigned that binary value (e.g., a binary 1 if the station matches, a binary 0 if the station does not match). Once the parameters are assigned respective binary values regarding whether or not the monitored parameter matches (or is within a threshold of) a value for that parameter in the driver profile, the binary values may be multiplied by the weight associated with that parameter and the resulting products averaged. Multiplying the average of the products by 100 may produce a percentage of the likelihood that the driver is the primary driver, and the driver may be determined to be the primary driver if the percentage is greater than a threshold. For example, using the exemplary values above for the learned and observed parameters and the weights associated with the parameters, and assuming that the turning hardness and temperature settings fall within the corresponding threshold range of values for the driver profile, the current driver may be determined to have an 81.25% likelihood to be the primary driver. Accordingly, if the threshold likelihood percentage is equal to or below 81.25%, the driver may be identified as the primary driver.

It is to be understood that the above-described calculation for determining if the current driver is the primary driver is exemplary and any suitable calculation may be performed. For example, the relationship between the currently-observed values of the parameters to the learned average values of the driver profile may be weighted and a likelihood may be determined based on the weighted values. In some embodiments, the weighted values may be summed, and a comparison of the sum to a likelihood threshold may be performed to determine if the current driver is the primary driver. In embodiments in which alternate driver profiles are available, similar calculations may be performed in order to determine the likelihood that the current driver is each of the primary and alternate drivers.

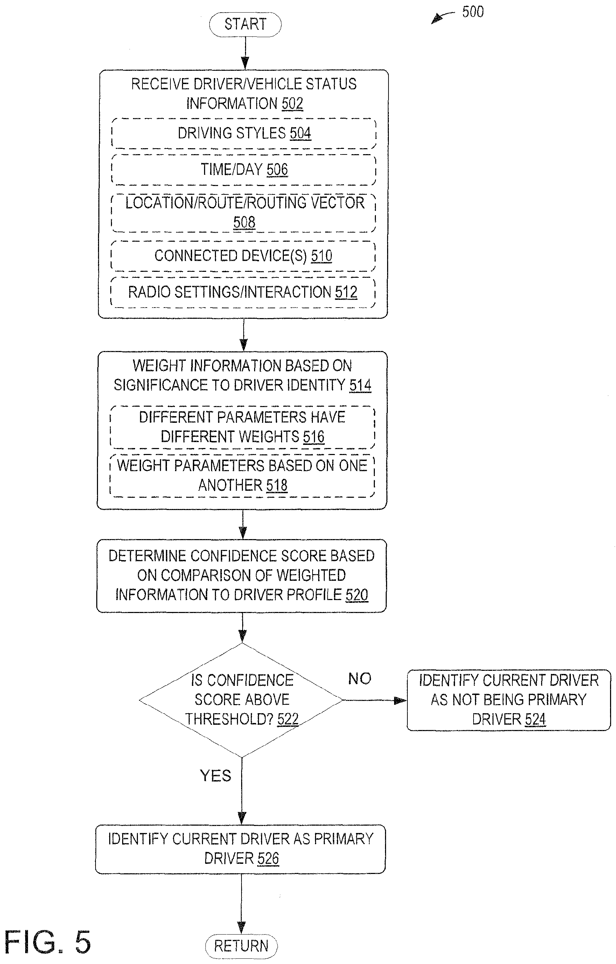

FIG. 5 is a flow chart of a method 500 of determining an identity of a driver based on weighted information from one or more data sources. For example, the method 500 may be performed by the weighting engine 214 and/or the confidence score engine 202 of FIG. 2. At 502, the method 500 includes receiving driver and/or vehicle status information indicating operational conditions present during operation of the vehicle by a current driver. The driver and/or vehicle status information may include driving styles associated with the current driver (e.g., acceleration, braking, turning, shifting, and similar profiles of the current driver), as indicated at 504, a time of day and/or calendar day, as indicated at 506, a location/route/routing vector (e.g., as determined by a GPS sensor and/or navigational subsystem of an in-vehicle computing system), as indicated at 508, features of one or more connected devices (e.g., device names, accounts, etc.), as indicated at 510, radio settings/observed interactions, as indicated at 512, and/or any other suitable status information or combination of status information relating to the driver and/or the vehicle.

At 514, the method 500 includes weighting the received information based on the significance of the information to the driver identity. For example, different parameters and/or conditions of the driver/vehicle status information may be assigned different weights, as indicated at 516, based on how much the information may be relied upon to predict and/or identify the driver of the vehicle. The parameters may be weighted based upon one another (e.g., one parameter may be weighted differently depending upon a value and/or presence of another parameter), as indicated at 518. The method includes determining a confidence score based on a comparison of the weighted information to a primary driver profile, as indicated at 520.

At 522, the method 500 includes identifying whether the determined confidence score is above a threshold. The threshold may be adjusted based upon factors such as the driver/vehicle status information, the amount of information in the primary driver profile, and/or a driver-dependent function being controlled by the identity of the driver. For example, if a driver-dependent function includes displaying a notification to a driver based upon the driver's identity, the threshold may be lowered for a notification that has a lower security and/or privacy characteristic than a notification that has a higher security and/or privacy characteristic. In another example, the threshold may be lowered as an urgency of the driver-dependent notification increases, as a higher level of urgency may indicate a higher importance of the notification and a lower concern with presenting the notification to a particular driver.

If the confidence score is below the threshold (e.g., "NO" at 522), the method proceeds to 524 to identify the current driver as not being the primary driver. Conversely, if the confidence score is above the threshold (e.g., "YES" at 522), the method proceeds to 526 to identify the current driver as the primary driver. Based upon the identity of the current driver, one or more driver-dependent functions may be controlled. It is to be understood that the method 500 may be continuous, such that the confidence level that a current driver is the primary driver may be continually and/or dynamically boosted and/or lowered based on observed, real-time data and queried when a driver-dependent function is to be performed.

It is to be understood that the driver profile may in some embodiments be continually updated as more sensor information is received at the external device and/or the in-vehicle computing system. For example, the in-vehicle computing system may dynamically update the driver profile while operating under control of a driver identified as the primary driver and/or may continue to send sensor information to the external device and periodically receive an updated driver profile (or updates to the stored driver profile). It is to be further understood that, while the method 400 references a single primary driver profile, similar techniques may be utilized to generate and receive one or more other (e.g., non-primary) driver profiles.

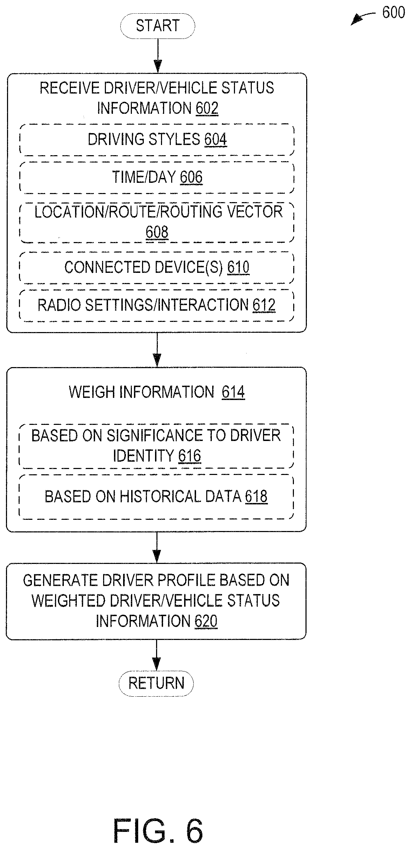

FIG. 6 is a flow chart of a method 600 of generating a driver profile based on weighted information from one or more data sources. For example, the method 500 may be performed by an extra-vehicle server communicatively connected to an in-vehicle computing system via a cloud-based network. At 602, the method 600 includes receiving driver and/or vehicle status information indicating operational conditions present during operation of the vehicle by a current driver. The driver and/or vehicle status information may include driving styles associated with the current driver (e.g., acceleration, braking, turning, shifting, and other profiles of the current driver), as indicated at 604, a time of day and/or calendar day, as indicated at 606, a location/route/routing vector (e.g., as determined by a GPS sensor and/or navigational subsystem of an in-vehicle computing system), as indicated at 608, features of one or more connected devices (e.g., device names, accounts, etc.), as indicated at 610, radio settings/observed interactions, as indicated at 612, and/or any other suitable status information or combination of status information relating to the driver and/or the vehicle.

At 614, the method 600 includes weighting the received information, which may be based on the significance of the information to the driver identity, as indicated at 616 and/or based on historical data associated with one or more drivers, as indicated at 618. For example, different parameters and/or conditions of the driver/vehicle status information may be assigned different weights based on how much the information may be relied upon to predict and/or identify the driver of the vehicle. The parameters may be weighted based upon historical data (e.g., one parameter may be weighted differently depending upon a value and/or presence of another parameter recorded previously) and/or based on a historical significance of the parameter. The method includes generating a driver profile based on the weighted driver and/or vehicle status information, as indicated at 620.

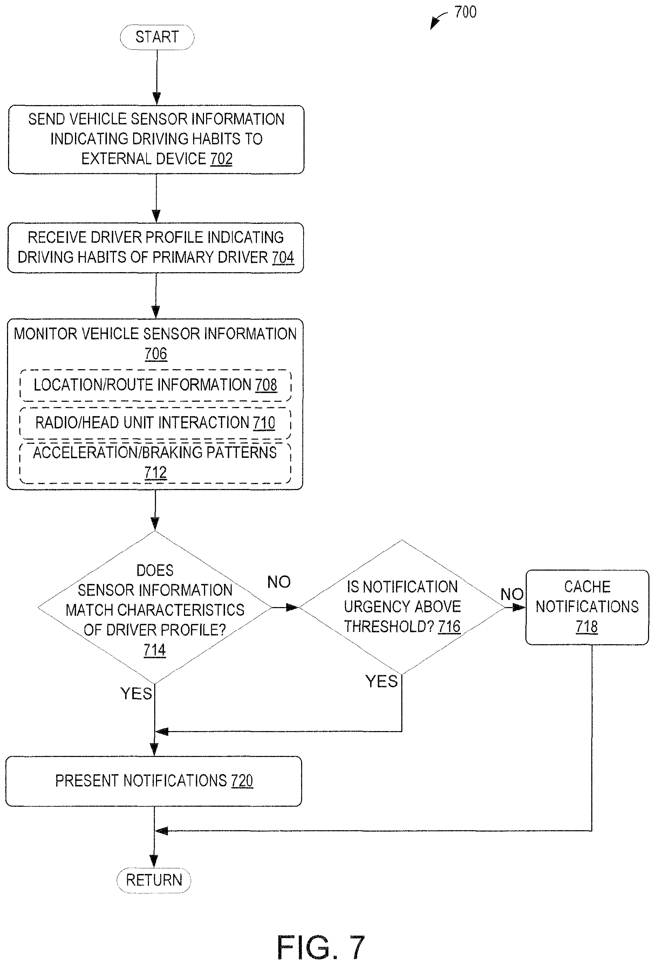

FIG. 7 is a flow chart of a method 700 of presenting notifications for an in-vehicle computing system based on an identification of a driver of a vehicle. The method 700 may be performed by an upgrade/update scheduler, which may be integrated in the in-vehicle computing system in some embodiments. At 702, the method 700 includes sending vehicle sensor information indicating driving habits to an external device. In some embodiments, the external device may include an extra-vehicle server for aggregating data from one or more vehicles. At 704, the method 700 includes receiving a driver profile indicating driving habits of a primary driver of the vehicle. For example, the driver profile may provide information regarding the driving style, frequent navigational routes/destinations, in-vehicle computing system interaction, and/or other driving habits associated with a primary driver (e.g., an owner and/or most frequent operator of the vehicle).

At 706, the method 700 includes monitoring vehicle sensor information, such as location and/or route information, as indicated at 708, radio and/or head unit interaction, as indicated at 710, and/or acceleration/braking patterns, as indicated at 712. For example, the method may include inferring a vehicle route and destination based on the positional and temporal information of the sensed data. It is to be understood that the above-referenced sensor information is exemplary in nature, and any suitable information may be monitored to compare with information in a driver profile to determine a driver of the vehicle and/or whether the driver of the vehicle is a primary driver. At 714, the method 700 includes determining if the sensor information matches characteristics of a driver profile. For example, the sensor information may be determined to match characteristics of a driver profile if a threshold amount of sensed data is within a threshold tolerance of the characteristics present in a primary driver profile. The characteristics and/or sensed information may be weighted, such that different characteristics and/or sensed data may contribute differently toward matching the sensor information with the driver profile.

If the sensor information does not match characteristics of the driver profile (e.g., "NO" at 714), the current driver of the vehicle may be identified as not being the primary driver of the vehicle, and the method 700 may include determining if a notification urgency of a particular notification is above an urgency threshold, as indicated at 716. Accordingly, different notifications may have different levels of urgency based on the importance associated with the notification. For example, notifications may include a notification of one or more available software updates for the in-vehicle computing system, vehicle recall data, environmental information, and/or any other suitable type of notification. In some examples, notifications that affect the safety of the driver and/or passengers of the vehicle may be given a higher priority than other notifications. If the urgency of a given notification is not above the threshold (e.g., "NO" at 716), the method 700 may include caching that notification, as indicated at 718. Caching the notification may include storing the notification and/or information related to the notification (e.g., locally at the in-vehicle computing system and/or at an external device) for presentation at a later time (e.g., when the primary driver is identified as the driver of the vehicle). Caching the notification may also include presenting one or more deferral options to a user to reschedule presentation of the notification. The deferral options may be based upon the driver profile, the urgency of the notification, and/or a current vehicle and/or user status. Alternatively, if the urgency of a given notification is above the threshold (e.g., "YES" at 716), the method 700 may proceed to 720 to present that notification. If the sensor information does match characteristics of the driver profile (e.g., "YES" at 714), the notification may be presented at 720. It is to be understood that the above-described deferral options may be presented if the primary driver dismisses or otherwise responds negatively to the presentation of the notification.

By determining a driver identity based on aggregated historical and real-time observed data, a level of confidence in the identity may be determined in order to allow granular control over driver-dependent functions based on the determined identity and confidence level. The diverse data supporting the identification of the driver may provide a more robust and accurate identification system in comparison to systems that use only one data source and/or data from transferrable items, such as key fobs, mobile devices, etc. Further, automatic detection of the user's identity may reduce a burden on the driver to remember and/or provide login credentials manually upon entering the vehicle.

In another example, drivers of particular vehicles in a group of monitored vehicles may be based on a fingerprint of each particular driver. The fingerprint may be learned over time so that different profiles for each driver of each vehicle may be learned over time, where particular data collected in-vehicle is transmitted to a central cloud source for offline processing and learning. Adaptive learning algorithms may be applied, including fuzzy logic and/or neural networks or similar such approaches to take specific driver features (such as average turning hardness, average throttle engagement rate of change during tip-ins, average braking depression during braking events, music channels selected, seat position, temperature settings, etc.) and categorize these features on a per vehicle and per driver basis for later identification of the driver during any particular driving event. The learned fingerprint may be a list of a plurality of such driver features and give a degree of matching for each one, and then form a conglomerated rating for the current driver to estimate the identity of the current driver. Then, such identification may be used as described herein to schedule one or more features, enable one or more features, etc.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices, such as the in-vehicle computing system 109, weighting engine 214, and/or confidence score engine 202 described with reference to FIGS. 1 and 2. The methods may be performed by executing stored instructions with one or more logic devices (e.g., processors) in combination with one or more additional hardware elements, such as storage devices, memory, hardware network interfaces/antennas, clock circuits, switches, actuators, displays, etc.

## Claims

1. A method for an in-vehicle computing system (109, 204, 300), the method comprising:
detecting a request to perform a driver-dependent function (216);
where performing the driver-dependent function includes presenting an incoming notification that is received from an external device located outside of the vehicle;
inferring an identity of the driver based on current driving behavior relative to one or more driver profiles (206), each of the one or more driver profiles (206) generated using driver-specific past driving behavior; and
selectively enabling performance of the driver-dependent function (216) of the in-vehicle computing system (109, 204, 300) based on the inferred driver identity.

2. The method of claim 1, wherein the driver-dependent function (216) includes a notification of one or more of available software updates for the in-vehicle computing system (109, 204, 300), vehicle recall data, and environmental information, and wherein detecting the request to perform the driver-dependent function (216) includes receiving data associated with the notification,
wherein said receiving data optionally includes receiving the data over the air from a network or a cloud computing system communicatively coupled to the in-vehicle computing system (109, 204, 300).

3. The method of any one of the preceding claims, wherein selectively enabling performance of the driver-dependent function (216) based on the inferred driver identity includes,
in response to the current driving behavior being indicative of a primary driver, enabling performance of the driver-dependent function (216); and
in response to the current driving behavior being indicative of a secondary driver, disabling performance of the driver-dependent function (216).

4. The method of claim 3,
wherein selectively enabling performance of the driver-dependent function (216) further includes displaying one or more deferral options to the primary driver, the one or more deferral options based on a driver profile associated with the primary driver,
wherein the one or more deferral options are optionally further based on a current status of the vehicle and/or the primary driver.

5. The method of claim 4, wherein the deferral options displayed to the primary driver are further based on a current vehicle and/or user status, the current vehicle status including a geographical location of the vehicle, a vehicle route, a time of day of vehicle operation, traffic conditions at the geographical location of the vehicle, vehicle speed, and engine speed, the current user status based on interactions of the primary driver with an in-vehicle entertainment system (109, 204, 300) of the in-vehicle computing system (109, 204, 300).

6. The method of claim 5, further comprising receiving an updated driver profile responsive to sending the current vehicle and/or user status information to an extra-vehicle server.

7. The method of any one of the preceding claims, wherein the driver-specific past driving behavior is aggregated at the in-vehicle computing system (109, 204, 300) during one or more prior vehicle trips, the driver-specific driving behavior including one or more of a driving route, seat position, steering wheel position, accelerator pedal usage profile, brake pedal usage profile, vehicle turning hardness, and interaction with a user interface of the in-vehicle computing system (109, 204, 300).

8. The method of any one of the preceding claims, wherein the driver-specific past driving behavior includes a plurality of driving parameters and wherein each driver profile generated based on the driver-specific past driving behavior includes the driver profile generated based on a weighted combination of the plurality of driving parameters.

9. The method of any one of the preceding claims, wherein inferring an identity of the driver based on current driving behavior relative to one or more driver profiles (206) includes comparing a weighted combination of the current driving behavior to the one or more driver profiles (206),
wherein inferring an identity of the driver based on current driving behavior relative to one or more driver profiles (206) optionally includes determining a confidence score based on the comparison of the weighted combination of the current driving behavior to the one or more driver profiles (206).

10. An in-vehicle computing system (109, 204, 300), comprising:
a processor;
a communication interface communicatively coupling the in-vehicle computing system (109, 204, 300) to a cloud-based network;
one or more vehicle sensors;
a display device; and
a storage device storing instructions executable by the processor to:
receive a current driving behavior;
weight the received driving behavior based on relevance to an identity of a current driver of a vehicle;
determine a confidence score based on a comparison of the weighted driving behavior to a driver profile;
identify the current driver as a driver identified by the driver profile responsive to determining that the confidence score is above a threshold;
selectively present an incoming notification that is received from an external device outside the vehicle based on the identified driver.

11. The system (109, 204, 300) of claim 10, wherein the instructions are further executable to perform a driver-dependent function (216) responsive to determining that the current driver is the driver identified by the driver profile,
wherein the driver-dependent function (216) optionally includes at least one of the following:
- adjusting settings and/or preferences of the in-vehicle computing system (109, 204, 300);
- adjusting settings and/or preferences of the vehicle; and
- unlocking a secure feature of the in-vehicle computing system (109, 204, 300).

## Patentansprüche

1. Verfahren für ein fahrzeuginternes Rechensystem (109, 204, 300), wobei das Verfahren Folgendes umfasst:
Erfassen einer Anforderung zum Durchführen einer fahrerabhängigen Funktion (216);
wobei Durchführen der fahrerabhängigen Funktion Präsentieren einer eingehenden Benachrichtigung beinhaltet, die von einer externen Einrichtung, die sich außerhalb des Fahrzeugs befindet, empfangen wird;
Erschließen einer Identität des Fahrers basierend auf aktuellem Fahrverhalten relativ zu einem oder mehreren Fahrerprofilen (206), wobei jedes des einen oder der mehreren Fahrerprofile (206) unter Verwendung eines fahrerspezifischen zurückliegenden Fahrverhaltens generiert wurde; und
selektives Aktivieren einer Durchführung der fahrerabhängigen Funktion (216) des fahrzeuginternen Rechensystems (109, 204, 300) basierend auf der erschlossenen Fahreridentität.

2. Verfahren nach Anspruch 1, wobei die fahrerabhängige Funktion (216) eine Benachrichtigung über ein oder mehrere verfügbare Software-Updates für das fahrzeuginterne Rechensystem (109, 204, 300), Fahrzeugrückrufdaten und Umgebungsinformationen beinhaltet und wobei das Erfassen der Anforderung zum Durchführen der fahrerabhängigen Funktion (216) Empfangen von der Benachrichtigung zugeordneten Daten beinhaltet,
wobei das Empfangen von Daten optional Empfangen der Daten über die Luft von einem Netzwerk oder einem Cloud-Computing-System beinhaltet, das kommunikativ an das fahrzeuginterne Rechensystem (109, 204, 300) gekoppelt ist.

3. Verfahren nach einem der vorhergehenden Ansprüche, wobei das selektive Aktivieren der Durchführung der fahrerabhängigen Funktion (216) basierend auf der erschlossenen Fahreridentität Folgendes beinhaltet
als Reaktion darauf, dass das aktuelle Fahrverhalten einen primären Fahrer angibt, Aktivieren der Durchführung der fahrerabhängigen Funktion (216); und
als Reaktion darauf, dass das aktuelle Fahrverhalten einen sekundären Fahrer angibt, Deaktivieren der Durchführung der fahrerabhängigen Funktion (216).

4. Verfahren nach Anspruch 3, wobei das selektive Aktivieren der Durchführung der fahrerabhängigen Funktion (216) ferner Anzeigen einer oder mehrerer Verschiebungsoptionen für den primären Fahrer beinhaltet, wobei die eine oder mehreren Verschiebungsoptionen auf einem dem primären Fahrer zugeordneten Fahrerprofil basieren,
wobei die eine oder mehreren Verschiebungsoptionen optional ferner auf einem aktuellen Status des Fahrzeugs und/oder des primären Fahrers basieren.

5. Verfahren nach Anspruch 4, wobei die dem primären Fahrer angezeigten Verschiebungsoptionen ferner auf einem aktuellen Fahrzeug- und/oder Benutzerstatus basieren, wobei der aktuelle Fahrzeugstatus einen geografischen Standort des Fahrzeugs, eine Fahrzeugroute, eine Tageszeit des Fahrzeugbetriebs, Verkehrsbedingungen an dem geografischen Standort des Fahrzeugs, Fahrzeuggeschwindigkeit und Motordrehzahl beinhaltet, wobei der aktuelle Benutzerstatus auf Interaktionen des primären Fahrers mit einem fahrzeuginternen Unterhaltungssystem (109, 204, 300) des fahrzeuginternen Rechensystems (109, 204, 300) basiert.

6. Verfahren nach Anspruch 5, ferner umfassend Empfangen eines aktualisierten Fahrerprofils als Reaktion auf Senden der aktuellen Fahrzeug- und/oder Benutzerstatusinformation an einen Server außerhalb des Fahrzeugs.

7. Verfahren nach einem der vorhergehenden Ansprüche, wobei das fahrerspezifische zurückliegende Fahrverhalten an dem fahrzeuginternen Rechensystem (109, 204, 300) während einer oder mehrerer zurückliegender Fahrzeugfahrten aggregiert wurde, wobei das fahrerspezifische Fahrverhalten eines oder mehrere von einer Fahrtroute, einer Sitzposition, einer Lenkradposition, einem Gaspedalbenutzungsprofil, einem Bremspedalbenutzungsprofil, einer Fahrzeugabbiegehärte und einer Interaktion mit einer Benutzerschnittstelle des fahrzeuginternen Rechensystems (109, 204, 300) beinhaltet.

8. Verfahren nach einem der vorhergehenden Ansprüche, wobei das fahrerspezifische zurückliegende Fahrverhalten eine Vielzahl von Fahrparametern beinhaltet und wobei jedes basierend auf dem fahrerspezifischen zurückliegenden Fahrverhalten generierte Fahrerprofil das Fahrerprofil beinhaltet, das basierend auf einer gewichteten Kombination der Vielzahl von Fahrparametern generiert wurde.

9. Verfahren nach einem der vorhergehenden Ansprüche, wobei das Erschließen einer Identität des Fahrers basierend auf aktuellem Fahrverhalten relativ zu einem oder mehreren Fahrerprofilen (206) Vergleichen einer gewichteten Kombination des aktuellen Fahrverhaltens mit dem einen oder den mehreren Fahrerprofilen (206) beinhaltet,
wobei das Erschließen einer Identität des Fahrers basierend auf aktuellem Fahrverhalten relativ zu einem oder mehreren Fahrerprofilen (206) optional Bestimmen eines Konfidenz-Scores basierend auf dem Vergleich der gewichteten Kombination des aktuellen Fahrverhaltens mit dem einen oder den mehreren Fahrerprofilen (206) beinhaltet.

10. Fahrzeuginternes Rechensystem (109, 204, 300), umfassend:
einen Prozessor;
eine Kommunikationsschnittstelle, die das fahrzeuginterne Rechensystem (109, 204, 300) kommunikativ an ein cloudbasiertes Netzwerk koppelt;
einen oder mehrere Fahrzeugsensoren;
eine Anzeigevorrichtung; und
eine Speichervorrichtung, die Anweisungen speichert, die durch den Prozessor zu Folgendem ausführbar sind:
Empfangen eines aktuellen Fahrverhaltens;
Gewichten des empfangenen Fahrverhaltens basierend auf der Relevanz für eine Identität eines aktuellen Fahrers eines Fahrzeugs;
Bestimmen eines Konfidenz-Scores basierend auf einem Vergleich des gewichteten Fahrverhaltens mit einem Fahrerprofil;
Identifizieren des aktuellen Fahrers als einen Fahrer, der durch das Fahrerprofil identifiziert ist, als Reaktion auf ein Bestimmen, dass der Konfidenz-Score über einem Schwellenwert liegt;
selektives Präsentieren einer eingehenden Benachrichtigung, die von einer externen Vorrichtung außerhalb des Fahrzeugs empfangen wurde, basierend auf dem identifizierten Fahrer.

11. System (109, 204, 300) nach Anspruch 10, wobei die Anweisungen ferner zum Durchführen einer fahrerabhängigen Funktion (216) als Reaktion auf ein Bestimmen ausführbar sind, dass der aktuelle Fahrer der durch das Fahrerprofil identifizierte Fahrer ist,
wobei die fahrerabhängige Funktion (216) optional mindestens eines der Folgenden beinhaltet:
- Anpassen von Einstellungen und/oder Präferenzen des fahrzeuginternen Rechensystems (109, 204, 300);
- Anpassen von Einstellungen und/oder Präferenzen des Fahrzeugs;
und
- Entsperren eines Sicherheitsmerkmals des fahrzeuginternen Rechensystems (109, 204, 300).

## Revendications

1. Procédé pour un système informatique embarqué (109, 204, 300), le procédé comprenant :
la détection d'une demande d'exécution d'une fonction dépendante du conducteur (216) ;
où l'exécution de la fonction dépendante du conducteur comporte la présentation d'une notification entrante reçue d'un dispositif externe situé à l'extérieur du véhicule ;
la déduction d'une identité du conducteur sur la base d'un comportement de conduite actuel par rapport à un ou plusieurs profils de conducteur (206), chacun des un ou plusieurs profils de conducteur (206) étant généré à l'aide du comportement de conduite passé spécifique au conducteur ; et
la permission sélective de l'exécution de la fonction dépendante du conducteur (216) du système informatique embarqué (109, 204, 300) sur la base de l'identité du conducteur déduite.

2. Procédé selon la revendication 1, dans lequel la fonction dépendante du conducteur (216) comporte une notification d'une ou de plusieurs mises à jour logicielles disponibles pour le système informatique embarqué (109, 204, 300), de données de rappel du véhicule et d'informations environnementales, et dans lequel la détection de la demande d'exécution de la fonction dépendante du conducteur (216) comporte la réception de données associées à la notification,
dans lequel lesdites données de réception comportent éventuellement la réception des données par voie aérienne à partir d'un réseau ou d'un système informatique cloud couplé de manière communicative au système informatique embarqué (109, 204, 300).

3. Procédé selon l'une quelconque des revendications précédentes, dans lequel la permission sélective de l'exécution de la fonction dépendante du conducteur (216) sur la base de l'identité du conducteur déduite comporte,
en réponse au comportement de conduite actuel indiquant un conducteur principal, la permission de l'exécution de la fonction dépendante du conducteur (216) ; et
en réponse au comportement de conduite actuel indiquant un conducteur secondaire, la désactivation de l'exécution de la fonction dépendante du conducteur (216).

4. Procédé selon la revendication 3, dans lequel la permission sélective de l'exécution de la fonction dépendante du conducteur (216) comporte également l'affichage d'une ou de plusieurs options de report au conducteur principal, l'une ou les plusieurs options de report étant basées sur un profil de conducteur associé au conducteur principal,
dans lequel l'une ou les plusieurs options de report sont éventuellement également basées sur un état actuel du véhicule et/ou du conducteur principal.

5. Procédé selon la revendication 4, dans lequel les options de report affichées au conducteur principal sont également basées sur un état actuel du véhicule et/ou de l'utilisateur, l'état actuel du véhicule comportant un emplacement géographique du véhicule, un itinéraire du véhicule, une heure de la journée de fonctionnement du véhicule, des conditions de circulation à l'emplacement géographique du véhicule, une vitesse du véhicule et un régime du moteur, l'état actuel de l'utilisateur étant basé sur des interactions du conducteur principal avec un système de divertissement embarqué (109, 204, 300) du système informatique embarqué (109, 204, 300).

6. Procédé selon la revendication 5, comprenant également la réception d'un profil de conducteur mis à jour en réponse à l'envoi des informations d'état actuel du véhicule et/ou de l'utilisateur à un serveur extérieur au véhicule.

7. Procédé selon l'une quelconque des revendications précédentes, dans lequel le comportement de conduite passé spécifique au conducteur est agrégé au niveau du système informatique embarqué (109, 204, 300) pendant un ou plusieurs trajets de véhicule antérieurs, le comportement de conduite spécifique au conducteur comportant un ou plusieurs d'un itinéraire de conduite, d'une position de siège, d'une position de volant, d'un profil d'utilisation de la pédale d'accélérateur, d'un profil d'utilisation de la pédale de frein, d'une dureté de virage du véhicule et d'une interaction avec une interface utilisateur du système informatique embarqué (109, 204, 300).

8. Procédé selon l'une quelconque des revendications précédentes, dans lequel le comportement de conduite passé spécifique au conducteur comporte une pluralité de paramètres de conduite et dans lequel chaque profil de conducteur généré sur la base du comportement de conduite passé spécifique au conducteur comporte le profil de conducteur généré sur la base d'une combinaison pondérée de la pluralité de paramètres de conduite.

9. Procédé selon l'une quelconque des revendications précédentes, dans lequel la déduction d'une identité du conducteur sur la base d'un comportement de conduite actuel par rapport à un ou plusieurs profils de conducteur (206) comporte la comparaison d'une combinaison pondérée du comportement de conduite actuel avec l'un ou les plusieurs profils de conducteur (206),
dans lequel la déduction d'une identité du conducteur sur la base d'un comportement de conduite actuel par rapport à un ou plusieurs profils de conducteur (206) comporte éventuellement la détermination d'un score de confiance sur la base de la comparaison de la combinaison pondérée du comportement de conduite actuel avec l'un ou les plusieurs profils de conducteur (206) .

10. Système informatique embarqué (109, 204, 300) comprenant :
un processeur ;
une interface de communication couplant de manière communicative le système informatique embarqué (109, 204, 300) à un réseau basé sur le cloud ;
un ou plusieurs capteurs de véhicule ;
un dispositif d'affichage ; et
un dispositif de stockage stockant des instructions exécutables par le processeur pour :
recevoir un comportement de conduite actuel ;
pondérer le comportement de conduite reçu sur la base de sa pertinence par rapport à une identité d'un conducteur actuel d'un véhicule ;
déterminer un score de confiance sur la base d'une comparaison du comportement de conduite pondéré avec un profil de conducteur ;
identifier le conducteur actuel comme un conducteur identifié par le profil du conducteur en réponse à la détermination selon laquelle le score de confiance est supérieur à un seuil ;
présenter de manière sélective une notification entrante reçue d'un dispositif externe à l'extérieur du véhicule sur la base du conducteur identifié.

11. Système (109, 204, 300) selon la revendication 10, dans lequel les instructions sont également exécutables pour exécuter une fonction dépendante du conducteur (216) en réponse à la détermination selon laquelle le conducteur actuel est le conducteur identifié par le profil de conducteur,
dans lequel la fonction dépendante du conducteur (216) comporte éventuellement au moins l'un des éléments suivants :
- le réglage de paramètres et/ou de préférences du système informatique embarqué (109, 204, 300) ;
- le réglage de paramètres et/ou de préférences du véhicule ;
et
- le déverrouillage d'une fonctionnalité sécurisée du système informatique embarqué (109, 204, 300).
